# EUROPÄISCHE PATENTSCHRIFT

(11) **EP 2 005 014 B1**
(45) Veröffentlichungstag und Bekanntmachung des Hinweises auf die Patenterteilung: **16.05.2012**
(21) Anmeldenummer: 07727333.2
(22) Anmeldetag: 26.03.2007
(51) Int. Cl.: F16C 11/04, F16C 27/02, F16C 35/02

(54) **VERFAHREN ZUR HERSTELLUNG EINER SPIELFREIEN GLEITLAGERANORDNUNG**
METHOD OF PRODUCING A PLAY-FREE PLAIN BEARING ARRANGEMENT
PROCEDE DE FABRICATION D' UN SYSTEME DE PALIER COULISSANT SANS JEU

(30) Priorität: 06.04.2006 DE 102006016612
(43) Veröffentlichungstag der Anmeldung: 24.12.2008
(73) Patentinhaber: Saint-Gobain Performance Plastics Pampus GmbH, 47877 Willich (DE)
(72) Erfinder: WEIDEN, Janaki, 51467 Bergisch-Gladbach (DE); JÄGER, Hans-Jürgen, 50354 Hürth (DE)
(74) Vertreter: Cohausz & Florack
(86) Internationale Anmeldenummer: PCT/EP2007/052860
(87) Internationale Veröffentlichungsnummer: WO 2007/113157

(56) Entgegenhaltungen:
- WO-A-00/52348
- DE-A1- 1 817 036
- DE-A1- 10 124 843
- DE-U1- 8 700 792
- US-A- 5 229 198

## Beschreibung

Die Erfindung betrifft ein Verfahren zur Herstellung einer spielfreien Gleitlageranordnung mit definiert eingestelltem Drehmoment mit einem Gleitlager, wobei das Gleitlager ein Lagergehäuse und eine in das Lagergehäuse eingesetzte Lagerbuchse umfasst, wobei die Lagerbuchse und das Lagergehäuse axial geöffnet sind, und einer Welle als Lagerpartner der Lagerbuchse, siehe Oberbegriff des Anspruchs 1.

Spielfreie Gleitlageranordnungen mit geschlitzter Gleitlagerbuchse sind aus dem Stand der Technik seit längerem bekannt und kommen in verschiedenen industriellen Anwendungen, beispielsweise in Scharnieren, zum Einsatz. So ist etwa aus der DE 87 00 792 U1 eine Schwenklagerung für eine Sicherungsstrebe an einer Stütze für LKW-Behälter bekannt, welche einen zylindrischen Lagerzapfen aufweist. Als nachteilig erweist sich hierbei regelmäßig, dass eine spielfreie Lagerung eines Bauteils in einem Gleitlager mit definiert eingestelltem Drehmoment, insbesondere mit sehr kleinem Drehmoment, nur mit höchstem technischen Aufwand, in vielen Fällen sogar überhaupt nicht, erreicht werden kann.

Die Pressung und damit verbunden das Drehmoment über die Lebensdauer des Gleitlagers hängen ab von den Fertigungstoleranzen der Einzelkomponenten, dem Verschleiß, dem das Gleitlager im Betrieb unterworfen ist, sowie den Temperaturschwankungen im Betrieb. Bei letzteren machen sich insbesondere die unterschiedlichen Wärmeausdehnungskoeffizienten der eingesetzten Materialien bemerkbar. Eine Kompensation der Einflüsse der genannten Faktoren ist jeweils nur für eine Betriebssituation mit gegebener Temperatur, Fertigungstoleranz und Verschleiß unter hohem technischem Aufwand möglich. Geänderte Betriebsbedingungen führen unweigerlich zu einer unkontrollierten Änderung der Pressung und damit zu einem veränderten Drehmoment.

Der Erfindung liegt daher die Aufgabe zugrunde, ein Verfahren zur Herstellung einer spielfreien Gleitlageranordnung anzugeben, wobei das Gleitlager bzw. die Gleitlageranordnung auch unter wechselnden Betriebsbedingungen und über die gesamte Lebensdauer mit definiertem Drehmoment betrieben werden kann.

Die Aufgabe wird bei einem Verfahren zur Herstellung einer spielfreien Gleitlageranordnung nach dem Oberbegriff von Patentanspruch 1 dadurch gelöst, dass die Welle mit Übermaß in die Lagerbuchse derart eingesetzt wird, dass sich die Lagerbuchse und das Lagergehäuse aufweiten.

Bei dem erfindungsgemäßen Verfahren wird ausgenutzt, dass das axial geöffnete und durch die mit Übermaß in die Lagerbuchse eingesetzte Welle aufgeweitete Gehäuse eine konstante Klemmwirkung auf die Welle ausübt und somit für eine dauerhafte Spielfreiheit sorgt.

Ändern sich mit der Zeit die Abmaße der Einzelkomponenten des Gleitlagers bzw. der Gleitlageranordnung durch Temperaturschwankungen und/oder Verschleiß, so wird dies durch die konstante Klemmwirkung des axial geöffneten Gehäuses derart kompensiert, dass die definierte Pressung und damit verbunden das definierte Drehmoment des Gleitlagers erhalten bleibt. Die Gleitlageranordnung kann zusätzlich axial durch einen zweiten Bund gesichert werden.

Die Klemmkraft und damit das Drehmoment der Gleitlageranordnung können durch die Steifigkeit des Gehäuses, insbesondere durch den verwendeten Werkstoff und die Gehäusewanddicke sehr präzise eingestellt werden. Ferner kann die gewünschte Steifigkeit auch durch eine entsprechende Gehäusegeometrie mit Verstärkungsrippen usw. erreicht werden.

Die in der Gleitlageranordnung verwendete Welle weist vorzugsweise stirnseitig einen Radius oder eine Fase auf. Dies erleichtert das Einfügen der erfindungsgemäß mit Übermaß gefertigten Welle in das Gleitlager.

Ferner sollte die Welle eine für trocken laufende Gleitlager geeignet hohe Oberflächengüte aufweisen. Die Oberflächenrauhigkeit der Welle liegt hierbei sinnvollerweise zwischen 0,02 und 1 µm, vorzugsweise zwischen 0,05 und 0,8 µm, insbesondere zwischen 0,1 und 0,4 µm.

Die Einsatzmöglichkeiten einer nach dem zuvor beschriebenen Verfahren hergestellten Gleitlageranordnung sind sehr vielfältig. Besonders vorteilhaft ist die Verwendung in einem Automobil, wo es auf eine lange Lebensdauer bei definiertem und zeitlich konstantem Drehmoment bei wechselnden Betriebsbedingungen (Temperatur) ankommt. Hier ist insbesondere der Einsatz in einer verstellbaren Scheinwerferaufhängung ("Kurvenlicht") vorteilhaft, da sich hierbei eine mit der Zeit abnehmende Spielfreiheit und damit einhergehend aufkommende Vibrationen des Scheinwerfers besonders störend bemerkbar machen. Weitere vorteilhafte Einsatzmöglichkeiten ergeben sich in Notebook-Scharnieren, Tür-Scharnieren, Druckerköpfen oder Winkelsensoren.

Im Folgenden wird die Erfindung anhand einer ein Ausführungsbeispiel darstellenden Zeichnung näher erläutert. Es zeigen:
- Fig. 1: eine erfindungsgemäß hergestellte Gleitlageranordnung in der Ausführung als Loslager in seitlicher Schnittansicht,
- Fig. 2: die Gleitlageranordnung aus Fig. 1 in Frontansicht gemäß der Schnittlinie II-II,
- Fig. 3: eine erfindungsgemäß hergestellte Gleitlageranordnung in der Ausführung als Festlager in seitlicher Schnittansicht und
- Fig. 4: das Material der Lagerbuchse der Gleitlageranordnung aus Fig. 1 im Querschnitt.

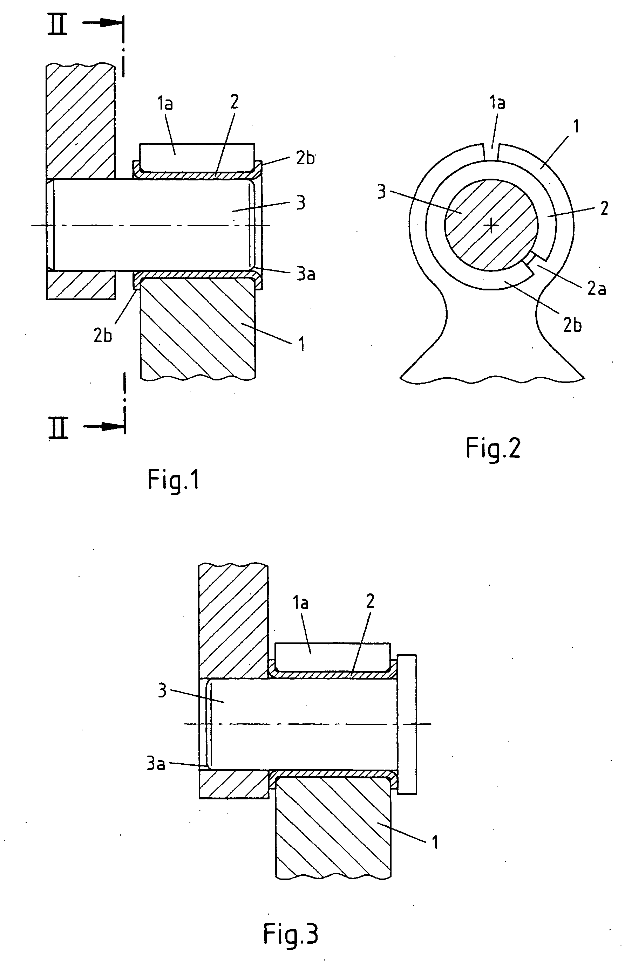

Die spielfreie Gleitlageranordnung nach Fig. 1 umfasst Lagergehäuse 1 eine in das Lagergehäuse eingesetzte Lagerbuchse 2 sowie einer in die Lagerbuchse 2 eingesetzten Welle 3 als Lagerpartner der Lagerbuchse. Die Lagerbuchse 2 weist an ihren beiden Enden jeweils einen Axialbund 2b auf, durch welchen ein fester, gegen ein unbeabsichtigtes Herausrutschen gesicherter Sitz der Lagerbuchse 2 im Gehäuse 1 gegeben ist. Wie auch in Fig. 2 erkennbar, sind sowohl das Lagergehäuse 1 als auch die Lagerbuchse 2 axial geöffnet, wobei die axialen Öffnungen des Gehäuses 1 und der Buchse 2 jeweils als axialer Schlitz 1a, 2a ausgebildet sind.

Bei der erfindungsgemäß hergestellten Gleitlageranordnung ist die Welle 3 mit Übermaß in die Lagerbuchse 2 derart eingesetzt, dass sich die Lagerbuchse 2 und das Lagergehäuse 1 aufweiten. Die Welle 3 weist zumindest an ihrem einen Ende einen Radius 3a auf, welcher das Einfügen der relativ zu Lagerbuchse 2 und Lagergehäuse 1 mit Übermaß ausgebildeten Welle 3 erleichtert.

Durch die Klemm- und Federwirkung des aufgeweiteten Gehäuses 1 ist sichergestellt, dass die spielfreie Gleitlageranordnung über die gesamte Lebensdauer des Gleitlagers auch bei wechselnden Betriebsbedingungen ein konstantes Drehmoment aufweist. Das Drehmoment wird dabei durch die Werkstoffeigenschaften des Lagergehäuses 1, die verwendete Materialstärke und die Gehäusegeometrie beeinflusst.

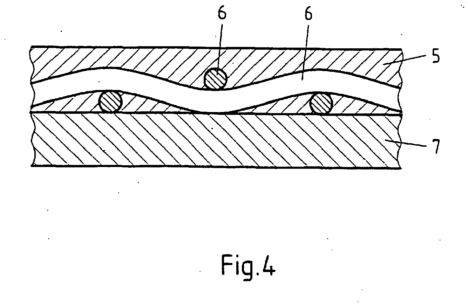

In Fig. 4 ist das Material der Lagerbuchse 2 der Gleitlageranordnung aus Fig. 1 im Querschnitt dargestellt. Es umfasst an seiner dem Lagerpartner der Lagerbuchse 2 zugewandten Seite eine Schicht 5 aus Gleitmaterial, vorliegend einem PTFE-Compound-Material. Innerhalb der Schicht 5 ist ein Verstärkungsmaterial vorgesehen, das vorliegend als Drahtgewebe 6 ausgebildet ist und aus Kupfer, Edelstahl, Chrom, Nickel, Zink, einer Zink-Eisen-Legierung, Eisen, Bronze und/oder Aluminium oder einer Legierung davon bestehen kann. Rückseitig ist die Gleitmaterialschicht 5 mit einem massiv ausgebildeten Träger 7 verbunden. Dieser besteht vorliegend aus Metall, vorzugsweise Stahl, Edelstahl, Kupfer, Titan, Bronze, Aluminium oder einer Legierung hiervon.

Die in den Fig. 1 bis 3 gezeigte Gleitlageranordnung kommt beispielsweise bei einer verstellbaren Scheinwerferanordnung in einem Automobil zur Anwendung, wobei das Lagergehäuse Teil eines fest mit der Karosserie verbundenen Rahmens ist und die Welle ihrerseits mit der Aufnahme einer horizontal und/oder vertikal verstellbaren Scheinwerfereinheit verbunden ist. Ändern sich mit der Zeit die Abmaße der Einzelkomponenten des Gleitlagers bzw. der Gleitlageranordnung durch Temperaturschwankungen und/oder Verschleiß, so wird dies durch die konstante Klemmwirkung des axial geöffneten Gehäuses derart kompensiert, dass die definierte Pressung und damit verbunden das definierte Drehmoment des Gleitlagers erhalten bleibt.

Die erfindungsgemäß hergestellte Gleitlageranordnung ermöglicht eine spielfreie Lagerung mit definiert eingestelltem Drehmoment auch unter Verwendung axial geöffneter Lagerbuchsen. Folglich ist es nunmehr möglich, Gleitlager wie Nadel- oder Kugellager auch spielfrei auszuführen.

## Patentansprüche

1. Verfahren zur Herstellung einer spielfreien Gleitlageranordnung mit definiert eingestelltem Drehmoment mit einem Gleitlager, wobei das Gleitlager ein Lagergehäuse (1) und eine in das Lagergehäuse (1) eingesetzte Lagerbuchse (2) umfasst, wobei die Lagerbuchse (2) und das Lagergehäuse (1) derart axial geöffnet sind, daß eine nicht geschlossene Umfangsfläche der Lagerbuchse und des Lagergehäuses vorliegt und mit einer Welle (3) als Lagerpartner der Lagerbuchse (2),
**dadurch gekennzeichnet, dass** die Welle (3) mit Übermaß in die Lagerbuchse (2) derart eingesetzt wird, dass sich die Lagerbuchse (2) und das Lagergehäuse (1) aufweiten.

2. Verfahren nach Anspruch 1,
**dadurch gekennzeichnet, dass** die axiale Öffnung der Lagerbuchse (2) und/oder die axiale Öffnung des Lagergehäuses (1) als axialer Schlitz (2a) ausgebildet sind.

3. Verfahren nach Anspruch 1 oder 2,
**dadurch gekennzeichnet, dass** das Gehäuse (1) aus einem im Spritzgussverfahren verarbeitbaren Kunststoff besteht.

4. Verfahren nach Anspruch 3,
**dadurch gekennzeichnet, dass** der im Spritzgussverfahren verarbeitbare Kunststoff um die Lagerbuchse (2) herumgespritzt ist.

5. Verfahren nach Anspruch 1 oder 2,
**dadurch gekennzeichnet, dass** das Gehäuse (1) aus einem metallischen Werkstoff besteht.

6. Verfahren nach Anspruch 5,
**dadurch gekennzeichnet, dass** der metallische Werkstoff eine Memory-Legierung ist.

7. Verfahren nach einem der Ansprüche 1 bis 6,
**dadurch gekennzeichnet, dass** die Lagerbuchse (2) als Gleitmaterial (5) einen Kunststoff, vorzugsweise einen Hochtemperatur-Kunststoff, **besonders** vorzugsweise einen Fluorkunststoff, insbesondere Polytetrafluorethylen, Polyimid, Polyamidimid, Polyvinylidenfluorid, Perfluoralkoxy-Copolymer, Polyetheretherketon, Polyethylen, insbesondere ultrahochmolekulares Polyethylen, oder deren Kombinationen enthält.

8. Verfahren nach Anspruch 7,
**dadurch gekennzeichnet, dass** die Lagerbuchse (2) ein Verstärkungsmaterial (6) enthält.

9. Verfahren nach Anspruch 8,
**dadurch gekennzeichnet, dass** das Verstärkungsmaterial (6) aus Metall, insbesondere Kupfer, Edelstahl, Chrom, Nickel, Zink, einer Zink-Eisen-Legierung, Eisen, Bronze und/oder Aluminium oder einer Legierung davon besteht.

10. Verfahren nach Anspruch 8 oder 9,
**dadurch gekennzeichnet, dass** das Verstärkungsmaterial (6) eine offene Struktur aufweist und insbesondere als Gewebe, insbesondere als Drahtgewebe (6), Streckmetall, Vlies, insbesondere als Metallvlies und/oder als Lochblech ausgebildet ist.

11. Verfahren nach einem der Ansprüche 7 bis 10,
**dadurch gekennzeichnet, dass** das Gleitmaterial rückseitig mit einem Träger (7) verbunden ist.

12. Verfahren nach Anspruch 11,
**dadurch gekennzeichnet, dass** das der Träger (7) aus Metall, vorzugsweise Stahl, Edelstahl, Kupfer, Titan, Bronze, Aluminium oder einer Legierung hiervon besteht.

13. Verfahren nach einem der Ansprüche 1 bis 12,
**dadurch gekennzeichnet, dass** das Drehmoment durch die Steifigkeit des Gehäuses (1), insbesondere durch den verwendeten Werkstoff und die Gehäusewanddicke eingestellt ist.

14. Verfahren nach einem der Ansprüche 1 bis 13,
**dadurch gekennzeichnet, dass** die Rauhigkeit Ra der Oberfläche der Welle (3) zwischen 0,02 und 1 µm, vorzugsweise zwischen 0,05 und 0,8 µm, insbesondere zwischen 0,1 und 0,4 µm liegt.

15. Verfahren nach einem der Ansprüche 1 bis 14, **dadurch gekennzeichnet, daß** die so hergestellte Gleitlageranordnung in einem Automobil verwendet wird.

## Claims

1. Method of producing a play-free plain bearing arrangement with a rotational torque which is set in a defined manner, said arrangement having a plain bearing, wherein the plain bearing comprises a bearing housing (1) and a bearing sleeve (2) which is inserted into the bearing housing (1), wherein the bearing sleeve (2) and the bearing housing (1) are open axially in such a way that an unclosed peripheral surface of the bearing sleeve and the bearing housing is provided, and having a shaft (3) as a bearing partner of the bearing sleeve (2), **characterized in that** the shaft (3) is inserted with an oversize into the bearing sleeve (2) in such a way that the bearing sleeve (2) and the bearing housing (1) expand.

2. Method according to Claim 1, **characterized in that** the axial opening of the bearing sleeve (2) and/or the axial opening of the bearing housing (1) are in the form of an axial slot (2a).

3. Method according to Claim 1 or 2, **characterized in that** the housing (1) consists of a plastic which can be processed in an injection moulding process.

4. Method according to Claim 3, **characterized in that** the plastic which can be processed in an injection moulding process is moulded around the bearing sleeve (2) by injection moulding.

5. Method according to Claim 1 or 2, **characterized in that** the housing (1) consists of a metallic material.

6. Method according to Claim 5, **characterized in that** the metallic material is a memory alloy.

7. Method according to one of Claims 1 to 6,**characterized in that** the bearing sleeve (2) contains as sliding material (5) a plastic, preferably a high-temperature plastic, particularly preferably a fluoroplastic, in particular polytetrafluoroethylene, polyimide, polyamideimide, polyvinylidene fluoride, perfluoroalkoxy copolymer, polyether ether ketone, polyethylene, in particular ultrahigh molecular weight polyethylene, or combinations thereof.

8. Method according to Claim 7, **characterized in that** the bearing sleeve (2) contains a reinforcing material (6).

9. Method according to Claim 8, **characterized in that** the reinforcing material (6) consists of metal, in particular copper, high-grade steel, chromium, nickel, zinc, a zinc-iron alloy, iron, bronze and/or aluminium or an alloy thereof.

10. Method according to Claim 8 or 9, **characterized in that** the reinforcing material (6) has an open structure and is formed, in particular, as woven fabric, in particular as a wire cloth (6), expanded metal, nonwoven, in particular as metal nonwoven and/or as a perforated metal sheet.

11. Method according to one of Claims 7 to 10, **characterized in that** the sliding material is bonded to a support (7) on the rear side.

12. Method according to Claim 11, **characterized in that** the support (7) consists of metal, preferably steel, high-grade steel, copper, titanium, bronze, aluminium or an alloy thereof.

13. Method according to one of Claims 1 to 12, **characterized in that** the rotational torque is set by the rigidity of the housing (1), in particular by the material used and the housing wall thickness.

14. Method according to one of Claims 1 to 13, **characterized in that** the roughness Ra of the surface of the shaft (3) is between 0.02 and 1 µm, preferably between 0.05 and 0.8 µm, in particular between 0.1 and 0.4 µm.

15. Method according to one of Claims 1 to 14, **characterized in that** the plain bearing arrangement produced thereby is used in an automobile.

## Revendications

1. Procédé de fabrication d'un ensemble de palier coulissant sans jeu dont le couple de rotation est réglé de manière définie, l'ensemble présentant un palier coulissant, le palier coulissant comportant un boîtier de palier (1) et une douille de palier (2) insérée dans le boîtier de palier (1), la douille de palier (2) et le boîtier de palier (1) étant ouverts axialement de telle sorte qu'il existe une surface périphérique non fermée sur la douille de palier et le boîtier de palier, et un arbre (3) formant un partenaire de montage de la douille de palier (2), **caractérisé en ce que** l'arbre (3) est inséré dans la douille de palier (2) avec un surdimensionnement de telle sorte que la douille de palier (2) et le boîtier de palier (1) s'évasent.

2. Procédé selon la revendication 1, **caractérisé en ce que** l'ouverture axiale de la douille de palier (2) et/ou l'ouverture axiale du boîtier de palier (1) sont configurées sous la forme d'une fente axiale (2a).

3. Procédé selon les revendications 1 ou 2, **caractérisé en ce que** le boîtier (1) est constitué d'une matière synthétique qui peut être traitée dans une opération de moulage par injection.

4. Procédé selon la revendication 3, **caractérisé en ce que** la matière synthétique apte à être traitée dans une opération de moulage par injection est injectée autour de la douille de palier (2).

5. Procédé selon les revendications 1 ou 2, **caractérisé en ce que** le boîtier (1) est constitué d'un matériau métallique.

6. Procédé selon la revendication 5, **caractérisé en ce que** le matériau métallique est un alliage à mémoire.

7. Procédé selon l'une des revendications 1 à 6, **caractérisé en ce que** la douille de palier (2) contient comme matériau de coulissement (5) une matière synthétique, de préférence une matière synthétique résistant aux hautes températures et de façon particulièrement préférable une matière synthétique fluorée, en particulier un polytétrafluoroéthylène, un polyimide, un polydiimide, un poly(fluorure de vinylidène, un copolymère perfluoroalcoxylé, une polyétheréthercétone, un polyéthylène, en particulier un polyéthylène à poids moléculaire ultra-élevé, ou leurs combinaisons.

8. Procédé selon la revendication 7, **caractérisé en ce que** la douille de palier (2) contient un matériau de renfort (6).

9. Procédé selon la revendication 8, caractérisé en e que le matériau de renfort (6) est constitué d'un métal, en particulier de cuivre, d'acier allié, de chrome, de nickel, de zinc, d'un alliage de zinc et de fer, de fer, de bronze, d'aluminium ou d'un de leurs alliages.

10. Procédé selon les revendications 8 ou 9, **caractérisé en ce que** le matériau de renfort (6) présente une structure ouverte et est en particulier configuré comme tissu, notamment comme tissu de fil (6), comme métal déployé, comme feutre, en particulier comme feutre métallique, et/ou comme tôle perforée.

11. Procédé selon l'une des revendications 7 à 10, **caractérisé en ce que** le matériau de coulissement est relié dorsalement à un support (7).

12. Procédé selon la revendication 11, **caractérisé en ce que** le support (7) est constitué de métal, de préférence d'acier, d'acier allié, de cuivre, de titane, de bronze, d'aluminium ou d'un de leurs alliages.

13. Procédé selon l'une des revendications 1 à 12, **caractérisé en ce que** le couple de rotation est réglé par l'intermédiaire de la rigidité du boîtier (1), en particulier grâce au matériau utilisé et à l'épaisseur de la paroi du boîtier.

14. Procédé selon l'une des revendications 1 à 13, **caractérisé en ce que** la rugosité Ra de la surface de l'arbre (3) est comprise entre 0,02 et 1 µm, de préférence entre 0,05 et 0,8 µm et notamment entre 0,1 et 0,4 µm.

15. Procédé selon l'une des revendications 1 à 14, **caractérisé en ce que** l'ensemble de palier coulissant ainsi formé est utilisé dans une automobile.
